# EUROPÄISCHE PATENTSCHRIFT

(11) **EP 3 823 850 B1**
(45) Veröffentlichungstag und Bekanntmachung des Hinweises auf die Patenterteilung: **18.01.2023**
(21) Anmeldenummer: 19730159.1
(22) Anmeldetag: 11.06.2019
(51) Int. Cl.: F16F 9/10, F16F 9/56, B60G 17/027, B60G 3/01, F16F 1/12

(54) **HÖHENVERSTELLBARE FEDERANORDNUNG FÜR EIN FAHRZEUG**
HEIGHT-ADJUSTABLE SPRING ARRANGEMENT FOR A VEHICLE
DISPOSITIF À RESSORT RÉGLABLE EN HAUTEUR POUR UN VÉHICULE

(30) Priorität: 20.07.2018 DE 102018212109
(43) Veröffentlichungstag der Anmeldung: 26.05.2021
(73) Patentinhaber: Bayerische Motoren Werke Aktiengesellschaft, 80809 München (DE)
(72) Erfinder: SCHATZBERGER, Uwe, 84172 Buch (DE); RIEDIGER, Martin, 81249 München (DE); DIETRICH, Maximilian, 82229 Seefeld (DE)
(86) Internationale Anmeldenummer: PCT/EP2019/065182
(87) Internationale Veröffentlichungsnummer: WO 2020/015924

(56) Entgegenhaltungen:
- DE-A1- 3 202 740
- US-A- 5 009 451
- US-A- 5 022 501
- US-A1- 2014 077 466
- US-A1- 2016 200 162

## Beschreibung

Die Erfindung betrifft eine höhenverstellbare Federanordnung für ein Kraftfahrzeug.

Aus dem Stand der Technik ist bereits eine Vielzahl von verschiedenen Federanordnungen für Kraftfahrzeuge bekannt, welche in ihrer Höhe verstellbar sind und dadurch eine Fahrlagenänderung bzw. Fahrlageneinstellung des Fahrzeugs ermöglichen.

Insbesondere bei einspurigen Kraftfahrzeugen, wie beispielsweise Motorrädern, hat die Fahrlage bzw. Niveau des Fahrzeugs einen großen Einfluss auf das Fahrverhalten und die Lenkgeometrie. Sowohl die Stabilität als auch die Handhabbarkeit (Handling) des Fahrzeugs sind stark von der Fahrlage abhängig, wobei die Kraftfahrzeuge meist für eine vorbestimmte Soll-Fahrlage ausgelegt sind.

Die meisten Federanordnungen bei Kraftfahrzeugen weisen eine Tragfeder mit einem segmentspezifischen Hubverhalten auf, welche zwischen Federtellern bzw. Federlagern eingespannt ist. Die Tragfeder kann aus ihrer Ausgangslage um den sogenannten Negativ-Federweg ausfedern und um den Positiv-Federweg einfedern. Der Negativ- und der Positiv-Federweg ergeben in Summe den Gesamt-Federweg der Tragfeder.

Die Federanordnung bzw. die Tragfeder wird Initial mit einer Federvorspannung beaufschlagt. Diese ist ein Parameter zur Einstellung der Federkraft der Tragfeder in der Normallage des Fahrzeugs bzw. in der Soll-Fahrlage. Zur Einstellung der Federvorspannung werden die Ausgangslage des Federvorgangs und die Anteile von Negativ- und Positiv-Federweg am Gesamt-Federweg verändert. Die Federvorspannung kann beispielsweise durch Verschiebung der Federteller bzw. Federlager entlang der Längsachse der Tragfeder eingestellt werden.

Bei den im Stand der Technik bekannten höhenverstellbaren Federanordnungen kann es jedoch dazu kommen, dass der Negativ-Federweg der Feder durch ein Absenken der Fahrlage des Fahrzeugs so groß und die wirksame Federvorspannung so klein wird, dass ein Mindestwert der Federvorspannung unterschritten wird. Durch die Reduzierung der Federvorspannung und die Unterschreitung des Mindestwerts, kann die Tragfeder beim Ausfedern, also bei einer Federbewegung entlang des Negativ-Federweges, beschädigt werden oder ein negatives Fahrverhalten des Kraftfahrzeugs verursachen. Beispielsweise kann die Tragfeder durch die zu kleine Federvorspannung beim Ausfedern von dem Federlager bzw. Federteller rutschen, wodurch es bei einer nachfolgenden Belastung zu einem asymmetrischen Federkrafteintrag in das Kraftfahrzeug kommen kann. Ferner kommt es zu akustisch wahrnehmbaren Geräuschen, welche den Fahrer des Kraftfahrzeugs verunsichern können.

Dies tritt bei herkömmlichen höhenverstellbaren Federanordnungen meist dann auf, wenn der Verstellweg, entlang welcher die Federanordnung in ihrer Höhe verstellt werden kann, größer ist als ein Federvorspannweg, entlang welcher die Ausgangslage der Tragfeder und somit die Federvorspannung eingestellt werden kann.

Durch das Absenken der Fahrlage wird bei herkömmlichen Federanordnungen meist das Verhältnis des Positiv-/Negativ-Federwegs verändert. Der Positiv-Federweg wird um die Absenkhöhe reduziert, der Negativ-Federweg um denselben Betrag vergrößert. Diese Vergrößerung des Negativ-Federwegs führt beim Ausfedern dazu, dass die Tragfeder vorspannungsfrei wird und sich von ihrer Federlagerung lösen kann.

Aus dem Dokument US 5 009 451 A ist zudem eine höhenverstellbare Federanordnung bekannt, welche eine Verschiebung einer Führungskolbenstange erlaubt, wodurch sich die ursprünglich eingestellte Federvorspannung bei der Höhenverstellung nicht verändert und auch der Ausfederweg im Dämpferzylinder gleich bleibt.

Der Erfindung liegt deshalb die Aufgabe zugrunde, eine alternative höhenverstellbare Federanordnung bereitzustellen, mit welcher die Höhe der Federanordnung bzw. eine Fahrlage eines Fahrzeugs einstellbar ist, wobei zugleich die Federvorspannung und der Negativ-Federweg einer Tragfeder der Federanordnung konstant bleiben.

Diese Aufgabe wird durch die Merkmalskombination gemäß Patentanspruch 1 gelöst.

Erfindungsgemäß wird daher eine höhenverstellbare Federanordnung für ein Fahrzeug insbesondere ein einspuriges Kraftfahrzeug vorgeschlagen. Die Federanordnung weist eine Tragfeder, einen ersten Begrenzungszylinder, einen zweiten Begrenzungszylinder sowie einen Führungszylinder auf. Der erste Begrenzungszylinder umfasst einen ersten Begrenzungszylindertopf und einen ersten Begrenzungskolben und der zweite Begrenzungszylinder einen zweiten Begrenzungszylindertopf und einen zweiten Begrenzungskolben. Der Führungszylinder weist einen Führungszylindertopf, einen in dem Führungszylindertopf verschiebbar gelagerten Führungskolben und eine Führungskolbenstange auf. Die Führungskolbenstange ist an dem Führungskolben fixiert und erstreckt sich aus dem Führungszylindertopf entlang einer Längsachse der Tragfeder heraus und durch die Tragfeder hindurch. Der erste Begrenzungszylinder ist an einem von dem Führungskolben entlang der Längsachse beabstandeten Abschnitt der Führungskolbenstange an der Führungskolbenstange fixiert. Ferner bestimmt der erste Begrenzungszylinder ein erstes Tragfederlager, an welchem die Tragfeder gelagert ist. Das erste Tragfederlager kann beispielsweise an dem ersten Begrenzungszylinder fixiert oder angeordnet sein oder alternativ von diesem ausgebildet werden. Als Gegenstück zu dem ersten Tragfederlager bestimmt der Führungszylindertopf ein zweites Tragfederlager, an welchem die Tragfeder gelagert ist. Das zweite Tragfederlager kann an dem Führungszylindertopf fixiert oder angeordnet sein oder alternativ von diesem ausgebildet werden. Die Tragfeder ist zwischen dem ersten und dem zweiten Tragfederlager mit einer Federvorspannung eingespannt. Die Führungskolbenstange ist mittels des ersten und zweiten Begrenzungszylinders verschiebbar, wodurch die Federanordnung in ihrer Höhe verstellbar ist. Dabei bleibt die auf die Tragfeder wirkende Federvorspannung sowie ein Negativ-Federweg der Tragfeder konstant, entlang dem die Tragfeder von dem zweiten Tragfederlager weg ausfedern kann.

Der erste Begrenzungszylinder ist insbesondere als Linearantrieb ausgebildet und der zweite Begrenzungszylinder als Ausgleichsbehälter, der zugleich die Bewegbarkeit der Tragfeder entlang des Negativ-Federweges begrenzt. Zum Anheben des Fahrzeugs kann ein Fluid, wie beispielsweise Öl oder Luft, durch eine Pumpe aus dem zweiten Begrenzungszylinder in den ersten Begrenzungszylinder gepumpt werden, wodurch sich der erste Begrenzungskolben gegenüber dem ersten Begrenzungszylindertopf und die Führungskolbenstange verschiebt und die Höhe der Federanordnung vergrößert wird. Zum Absenken der Federanordnung wirkt eine Kraft, beispielsweise die Gewichtskraft des Fahrzeugs, auf den ersten Begrenzungszylinder, wodurch das Fluid aus dem ersten in den zweiten Begrenzungszylinder gepumpt wird. Der zweite Begrenzungszylinder begrenzt dabei den Negativ-Federweg abhängig von dem aus dem ersten Begrenzungszylinder gepumpten Fluides.

Die Höhe der Federanordnung ist das Abmaß der Federanordnung entlang der Längsachse der Tragfeder, wobei die Höhe durch ein Einfahren der Führungskolbenstange reduziert und durch ein Ausfahren der Führungskolbenstange vergrößert werden kann. Eine Reduzierung der Höhe führt zu einem Absenken und eine Vergrößerung zu einem Anheben der Fahrlage des jeweiligen Fahrzeugs.

Eine vorteilhafte Ausführungsvariante der Federanordnung sieht vor, dass die Tragfeder, der erste Begrenzungszylinder, der zweite Begrenzungszylinder und der Führungszylinder konzentrisch zueinander angeordnet sind.

Der zweite Begrenzungszylinder weist bei einer vorteilhaften Weiterbildung eine Führungskolbenanschlagsfläche auf, welche eine Hubstrecke, entlang welcher der Führungskolben in dem Führungszylindertopf entlang der Längsachse verschiebbar ist, begrenzt. Der Führungskolben kann ausgehend von seiner Initialstellung in dem Führungszylindertopf einen Negativ-Hub zu der Tragfeder hin und einen Positiv-Hub von der Tragfeder weg ausführen. Der Negativ-Hub des Führungskolbens begrenzt und bestimmt den Negativ-Federweg der Tragfeder und der Positiv-Hub den Positiv-Federweg der Tragfeder. Die Führungskolbenanschlagfläche bewegt sich beispielsweise mit dem Führungskolben mit und begrenzt den Negativ-Hub dadurch, dass die Führungskolbenanschlagfläche an einem an dem Führungszylindertopf fixierten Anschlag zur Anlage kommt. Durch eine Verstellung der Führungskolbenanschlagfläche entlang der Längsachse kann somit der Negativ-Hub des Führungskolbens und dadurch der Negativ-Federweg der Tragfeder begrenzt und eingestellt werden.

Der zweite Begrenzungskolben ist vorzugsweise integral mit dem Führungskolben ausgebildet, wodurch der zweite Begrenzungszylinder und der Führungszylinder eine Baueinheit bilden und der zweite Begrenzungszylinder mit dem Führungskolben in dem Führungszylindertopf verschiebbar ist. Der zweite Begrenzungszylindertopf weist auf einer der Tragfeder zugewandten Seite die Führungskolbenanschlagsfläche auf. Der zweite Begrenzungszylinder bewegt sich somit gemeinsam mit dem Führungskolben, so dass der zweite Begrenzungszylinder und der Führungskolben gemeinsam als in dem Führungszylindertopf beweglicher Kolben betrachtet werden können.

Der zweite Begrenzungszylinder ist daher bei einer weiteren vorteilhaften Ausführungsvariante vollständig in dem Führungszylindertopf angeordnet. Der Innenraum des Führungszylindertopfs wird durch seinen Führungskolben mit dem zweiten Begrenzungszylinder in zwei Fluidkammern getrennt, welche vorzugsweise jedoch strömungstechnisch verbunden sind und der Führungskolben in dem Führungszylindertopf bei einer Bewegung entlang der Längsachse im Wesentlichen ungedämpft ist.

Eine vorteilhafte Weiterbildung der Federanordnung sieht zudem vor, dass der erste Begrenzungszylinder eine ersten Fluidkammer aufweist, die durch den ersten Begrenzungszylindertopf und den ersten Begrenzungskolben gebildet wird und der zweite Begrenzungszylinder eine zweiten Fluidkammer aufweist, die durch den zweiten Begrenzungszylindertopf und den zweiten Begrenzungskolben gebildet wird. Die erste Fluidkammer und die zweite Fluidkammer sind durch einen Fluidkanal strömungstechnisch verbunden sind, so dass ein Fluid durch den Fluidkanal zwischen der ersten und der zweiten Fluidkammer strömen kann.

Bei einer ebenfalls vorteilhaften Weiterbildung ist vorgesehen, dass ein Volumen der ersten Fluidkammer durch eine Verschiebung des ersten Begrenzungskolbens relativ zu dem ersten Begrenzungszylindertopf und ein Volumen der zweiten Fluidkammer durch eine Verschiebung des zweiten Begrenzungskolbens relativ zu dem zweiten Begrenzungszylindertopf variierbar sind. Die Führungskolbenstange ist durch eine Änderung des Volumens der ersten Fluidkammer und des Volumens der zweiten Fluidkammer entlang der Längsachse verschiebbar ist, wobei vorzugsweise der Negativ-Federweg durch eine Verschiebung der Führungskolbenanschlagsfläche gleich bleibt. Eine Änderung des Volumens der ersten Fluidkammer führt über den Fluidkanal zu einer Änderung des Volumens um den gleichen Betrag der zweiten Fluidkammer, wobei sich der jeweilige Begrenzungskolben relativ zu dem jeweiligen Begrenzungszylindertopf um die gleiche Strecke verschiebt. Die Volumenänderung der ersten Fluidkammer führt daher zu einer Verschiebung der Führungskolbenstange und zugleich zu einer Verschiebung der Führungskolbenanschlagfläche, so dass bei einer Verstellung der Höhe der Federanordnung zugleich der Negativ-Hub neu eingestellt wird und dadurch der Negativ-Federweg konstant bleibt.

Um die Verschiebung der Führungskolbenstange durch die Änderung des Volumens des ersten Begrenzungszylinders zur ermöglichen, ist der erste Begrenzungszylindertopf an der Führungskolbenstange fixiert, wobei der erste Begrenzungskolben das erste Tragfederlager bildet. Alternativ ist der erste Begrenzungskolben an der Führungskolbenstange fixiert, wobei der erste Begrenzungszylindertopf das erste Tragfederlager bildet.

Zur platzsparenden strömungstechnischen Verbindung der ersten mit der zweiten Fluidkammer ist die Führungskolbenstange bei einer vorteilhaften Ausführungsvariante zumindest abschnittsweise als ein Rohr ausgebildet. Der Fluidkanal ist ferner in dem Rohr angeordnet oder durch das Rohr gebildet.

Durch eine Leckage an der ersten Fluidkammer, der zweiten Fluidkammer oder an dem Fluidkanal kann es dazu kommen, dass nicht mehr ausreichend Fluid in dem aus der ersten Fluidkammer, der zweiten Fluidkammer und dem Fluidkanal bestehenden Fluidsystem vorhanden ist. Um Leckageverluste zu kompensieren, sieht eine vorteilhafte Variante der Erfindung vor, dass die Federanordnung ein Rückschlagventil aufweist. Ferner weist der Führungszylinder in seinem Führungszylindertopf eine dritte Fluidkammer auf, wobei die dritte Fluidkammer mit der ersten Fluidkammer, der zweiten Fluidkammer und/oder dem Fluidkanal durch das Rückschlagventil strömungstechnisch verbunden ist. Das Rückschlagventil sperrt eine Fluidströmung bzw. einen Fluidstrom in die dritte Fluidkammer, so dass ein Fluid nur aus der dritten Fluidkammer in die zweite Fluidkammer oder den Fluidkanal strömen kann.

Um tatsächlich nur dann Fluid aus dem Führungszylinder abzupumpen, wenn in der ersten Fluidkammer, der zweiten Fluidkammer oder dem Fluidkanal eine Leckage stattgefunden hat, sieht eine Ausbildungsform der Erfindung vor, dass das Rückschlagventil eine Rückstellfeder aufweist, welche ausgebildet ist, eine Fluidströmung von der dritten Fluidkammer bis zu einem Erreichen eines vorbestimmten Unterdrucks in der zweiten Fluidkammer und/oder dem Fluidkanal zu sperren. Erst wenn nicht ausreichend Fluid in die erste Fluidkammer gepumpt werden kann und dadurch in der zweiten Fluidkammer oder im Fluidkanal ein Unterdruck entsteht, gibt die Rückstellfeder den Strömungsweg durch das Rückschlagventil frei.

Die Federanordnung umfasst bei einer weiteren vorteilhaften Variante eine Fluidpumpe und ein Stellventil zur Höhenverstellung und Steuerung des Fluidflusses. Die Fluidpumpe ist ausgebildet, mit dem Stellventil in einer ersten Stellung ein Fluid aus der zweiten Fluidkammer durch das Stellventil in den erste Fluidkammer zu pumpen. Vorzugsweise wird die Führungszylinderstange dadurch entlang der Längsachse verschoben und die Höhe der Federanordnung verändert.

Nach einem weiteren Aspekt der Erfindung wird eine Federgabel mit einem ersten Gabelbein und einem zweiten Gabelbein vorgeschlagen, wobei in dem ersten Gabelbein eine erfindungsgemäße Federanordnung und in dem zweiten Gabelbein ein Dämpfer angeordnet ist. Das erste Gabelbein stellt dabei die Federwirkung und das zweite Gabelbein die Dämpfungswirkung der Federgabel bereit.

Darüber hinaus wird zudem ein Verfahren zur Fahrlagenverstellung eines Fahrzeugs mit einer erfindungsgemäßen Federanordnung vorgeschlagen. Das Fahrzeug wird bei dem Verfahren aus einer ersten Fahrlage abgesenkt, indem das Stellventil in eine zweite Stellung gebracht wird. Auf die Federanordnung wirkt entlang der Längsachse zumindest eine Gewichtskraft des Fahrzeugs, wodurch ein Fluid durch die Gewichtskraft aus dem ersten Begrenzungszylinder durch das Stellventil und den Fluidkanal in den zweiten Begrenzungszylinder gepresst wird. Dadurch verschiebt sich die Führungskolbenstange entlang der Längsachse in den Führungszylindertopf hinein. Ferner wird das Fahrzeug aus einer zweiten Fahrlage angehoben, indem das Stellventil in eine erste Stellung gebracht wird. Ein Fluid wird mit einer Pumpe aus dem zweiten Begrenzungszylinder durch das Stellventil und den Fluidkanal in den ersten Begrenzungszylinder gepumpt, wodurch sich die Führungskolbenstange entlang der Längsachse aus dem Führungszylindertopf heraus verschiebt. Vorzugsweise verschiebt sich die Führungskolbenanschlagfläche parallel zu der Verschiebung der Führungskolbenstange in die jeweils entgegengesetzte Richtung um den gleichen Betrag, so dass die Führungskolbenanschlagfläche absolut betrachtet ihre Position gegenüber dem Führungszylindertopf beibehält.

Die Führungskolbenstange ist durch die Begrenzungszylinder bzw. durch den ersten Begrenzungszylinder ca. 40 mm entlang der Längsachse verschiebbar. Das Absenken und das Anheben kann jeweils kontinuierlich erfolgen, wobei es beispielsweise durch eine dritte Stellung des Ventils möglich ist, den Fluidstrom zwischen der ersten und der zweiten Fluidkammer zu sperren und die Verschiebung der Führungskolbenstange zu stoppen, so dass Zwischenpositionen anfahr- bzw. einstellbar sind. Das Pumpen des Fluides in die erste Fluidkammer, bis die erste Fluidkammer vollständig gefüllt ist, benötigt ca. 10 Sekunden, wobei das Absenken, also das Pressen des Fluides in die zweite Fluidkammer, weniger als eine Sekunde benötigt.

Vorzugsweise ist in der dritten Fluidkammer ein Fluid angeordnet, welches gegenüber einem Fluid in der ersten und/oder der zweiten Fluidkammer einen Überdruck aufweist.

Die zweite Stellung des Ventils, in welcher die Federanordnung bzw. die Zylinderkolbenstange abgesenkt wird, entspricht vorzugsweise einer Grundstellung des Ventils, in welche dieses beispielsweise federbetätigt zurückfällt, sobald das Ventil nicht mehr angesteuert wird. Bei einem Ausfall der Steuerung oder einem Stromausfall wird das Fahrzeug dadurch automatisch abgesenkt.

Die Verschiebung der Führungskolbenstange führt zu einer Fahrlagenänderung, wobei die betragsmäßige Verschiebung der Führungskolbenstange nicht der Fahrlagenänderung entsprechen muss. Ist beispielsweise in beiden Gabelbeinen der Federgabel jeweils eine erfindungsgemäße Federanordnung vorgesehen, entspricht eine gleich große Verschiebung der beiden Führungskolbenstangen der Niveauänderung bzw. der Fahrlagenänderung des Fahrzeugs. Ist in nur einem Gabelbein eine erfindungsgemäße Federanordnung vorgesehen und in dem anderen Gabelbein nicht, führt die Verschiebung der Führungskolbenstange zu einer Fahrlagenänderung, welche der halben Verschiebung der Führungskolbenstange entspricht.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Schnittdarstellung einer eingefahrenen Federanordnung;
- Fig. 2: eine Schnittdarstellung einer ausgefahrenen Federanordnung.

Die Figuren sind beispielhaft schematisch. Gleiche Bezugszeichen in den Figuren weisen auf gleiche funktionale und/oder strukturelle Merkmale hin.

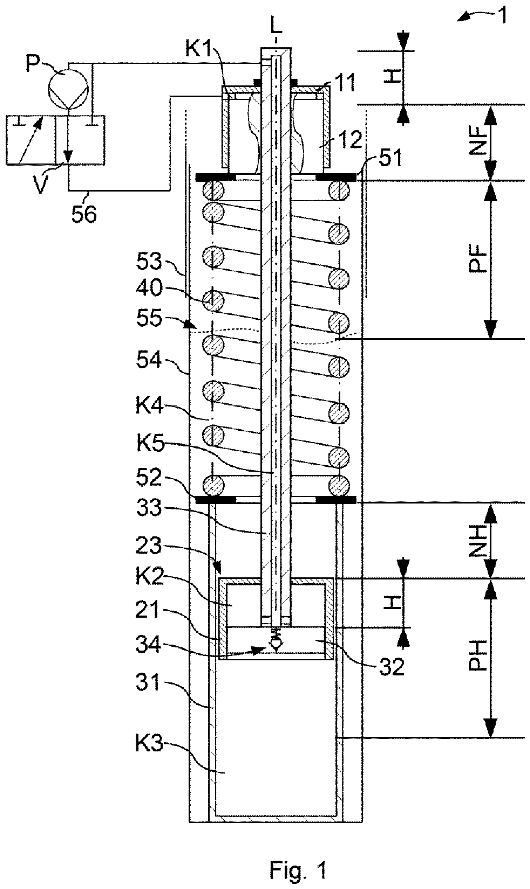

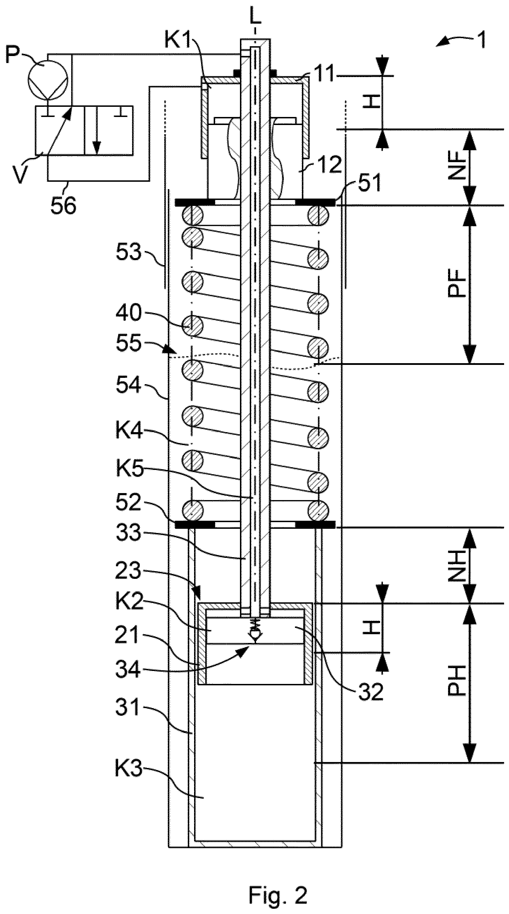

Die Figuren 1 und 2 zeigen jeweils eine Ausführungsform der erfindungsgemäßen Federanordnung 1, wobei alle Komponenten im Halbschnitt dargestellt sind.

Die Federanordnung 1 ist in einem Standrohr 54 und in einem Gleitrohr 53 angeordnet, welches das Standrohr 54 umgibt. Ferner wird die Federanordnung 1 im Wesentlichen durch einen ersten Begrenzungszylinder, einen zweiten Begrenzungszylinder, einen Führungszylinder sowie eine Tragfeder 40 gebildet. Der Führungszylinder weist einen Führungszylindertopf 31 auf, der in dem Standrohr 54 angeordnet und einseitig offen ist. In dem Führungszylindertopf 31 ist ein Führungskolben angeordnet, an dem die Führungskolbenstange 33 fixiert ist, die sich an der offenen Seite des Führungszylindertopfes 31 aus dem Führungszylindertopf 31 heraus und durch die Tragfeder 40 erstreckt.

An der von dem Führungskolben beabstandeten Seite der Führungskolbenstange 33 ist an dieser der erste Begrenzungszylinder angeordnet. Zwischen dem ersten Begrenzungszylinder und dem Führungszylindertopf 31 ist die Tragfeder 40 mit einer Federvorspannkraft vorgespannt. Der zweite Begrenzungszylinder ist unmittelbar an dem Führungskolben angeordnet und wird mit diesem bewegt. Der zweite Begrenzungskolben des zweiten Begrenzungszylinders ist integral mit dem Führungskolben als Kolben 32 ausgebildet. Der zweite Begrenzungszylindertopf 21 ist gegenüber dem Kolben 32 und der Führungskolbenstange 33 abgedichtet. Auf einer der Tragfeder 40 zugewandten Seite des zweiten Begrenzungszylindertopfes 21 weist dieser eine Führungskolbenanschlagsfläche 23 auf, welche die Verschiebbarkeit des Führungskolbens bzw. des Kolbens 32 und der Führungszylinderstange 33 entlang der Langsachse L der Tragfeder 40 zu der Tragfeder 40 hin begrenzt.

Der erste Begrenzungszylinder weist einen ersten Begrenzungszylindertopf 11 und einen ersten Begrenzungskolben 12 auf, wobei der erste Begrenzungszylindertopf 11 an der Führungskolbenstange 33 fixiert ist und der erste Begrenzungskolben 12 gegenüber dem Begrenzungszylindertopf 11 verschiebbar ist.

Die Führungskolbenstange 33 erstreckt sich sowohl durch den ersten Begrenzungszylinder als auch durch den zweiten Begrenzungszylinder, wobei die Begrenzungszylinder gegenüber der Führungskolbenstange 33 abgedichtet sind.

Die Tragfeder 40 liegt in Richtung ihrer Längsachse L an einem ersten Federteller 51 und einem zweiten Federteller 52 an. Der zweite Federteller 52 stützt sich bei dem dargestellten Ausführungsbeispiel an dem Führungszylindertopf 31 ab und bildet das zweite Tragfederlager. Der erste Federteller 52 stütz sich an der gegenüberliegenden Seite der Tragfeder 40 an dem ersten Begrenzungskolben 12 ab und bildet das erste Tragfederlager. Die Tragfeder 40 kann entlang ihrer Längsachse L über einen Positiv-Federweg PF einfedern und über einen Negativ-Federweg NF ausfedern, wobei diese jeweils durch die Verschiebbarkeit des Kolbens 32 in dem Führungszylindertopf 31 begrenzt werden. Der Kolben 32 ist entsprechend in dem Führungszylindertopf 31 um einen Positiv-Hub PH, der das Einfedern der Tragfeder 40 aus ihrer Ausgangslage entlang ihres Positiv-Federwegs PF begrenzt, und um einen Negativ-Hub NH verschiebbar, der das Ausfedern der Tragfeder 40 aus ihrer Ausgangslage entlang ihres Negativ-Federweges NF begrenzt.

Durch den ersten Begrenzungszylindertopf 11 und den ersten Begrenzungskolben 12 wird in dem ersten Begrenzungszylinder eine erste Fluidkammer K1 bestimmt, welche in ihrem Volumen durch eine Verschiebung des ersten Begrenzungskolbens 12 veränderbar ist. Die erste Fluidkammer K1 ist über ein Ventil V und eine Pumpe P, sowie über Fluidleitungen 56 mit einem Fluidkanal K5 strömungstechnisch verbunden. Bei dem dargestellten Ausführungsbeispiel ist die Führungskolbenstange 33 hohl bzw. als ein Rohr ausgeführt, welches den Fluidkanal K5 bildet. Durch den Kolben 32 und den zweiten Begrenzungszylindertopf 21 wird eine zweite Fluidkammer K2 des zweiten Begrenzungszylinders in dem Führungszylindertopf 31 bestimmt. Der Fluidkanal K5 ist an seiner von dem Kolben 32 abgewandten Seite strömungstechnisch mit der ersten Fluidkammer K1 und an seiner zu dem Kolben 32 gewandten Seite mit der zweiten Fluidkammer K2 verbunden, so dass ein Fluid über die Pumpe P und das Ventil V in einer ersten Stellung oder dem Ventil V in einer zweiten Stellung zwischen der ersten Fluidkammer K1 und der zweiten Fluidkammer K2 strömen kann.

Im Inneren des Führungszylindertopfes 31 ist zudem eine dritte Fluidkammer K3 bestimmt, in welcher sich der Kolben 32 mit dem zweiten Begrenzungszylindertopf 21 bewegt. Die dritte Fluidkammer K3 ist ferner über die offene Seite des Führungszylindertopfes 31 mit einer in dem Standrohr 54 bestimmten vierten Fluidkammer K4 strömungstechnisch verbunden. Die vierte Fluidkammer K4 bzw. der Innenraum des Standrohres 54 ist bis zu der Fluidgrenze 55 mit Öl oder einem anderen geeigneten Fluid gefüllt, kann jedoch auch vollständig gefüllt sein.

Soll die Höhe der Federanordnung 1 beispielsweise um die Strecke H erhöht werden, um das Fahrzeug aus einer zweiten Fahrlage anzuheben, wird das Ventil in eine erste Stellung gebracht, welcher der Stellung des Ventils in Figur 1 entspricht. Ein Fluid wird mit der Pumpe P aus der zweiten Fluidkammer K2 durch den Fluidkanal K4 durch das Ventil V in die erste Fluidkammer K1 gepumpt. Dadurch vergrößert sich das Volumen der ersten Fluidkammer K1 und der erste Begrenzungskolben 12 fährt aus dem ersten Begrenzungszylindertopf 11 aus. Das führt bei dem dargestellten Aufbau zu einer Verschiebung entlang der Längsachse L des ersten Begrenzungszylindertopfes 11 von dem Kolben 32 weg. Da der erste Begrenzungszylindertopf 11 an der Führungskolbenstange 33 fixiert ist, wird diese mit dem ersten Begrenzungszylindertopf 11 entlang der Längsachse L verschoben. Zugleich wird das Volumen der zweiten Fluidkammer K2 verkleinert, wodurch sich der zweite Begrenzungszylindertopf 21 entlang der Längsachse L von der Tragfeder 40 weg verschiebt. Die Verschiebung des zweiten Begrenzungszylindertopfes 21 bzw. die Verschiebung der Führungskolbenanschlagsfläche 23 an dem zweiten Begrenzungszylindertopf 21 kompensiert die Verschiebung der Führungskolbenstange 33, so dass die Führungskolbenanschlagfläche 23, die auf einer zu der Tragfeder 40 gewandten Seite des zweiten Begrenzungszylindertopfes 21 ausgebildet ist, sich nicht verschiebt, bzw. ihre Position konstant bleibt. Dadurch wird der Negativ-Hub und der Positiv-Hub des Kolbens 32 von der Führungskolbenanschlagfläche 32 gemessen konstant gehalten, so dass auch der Negativ-Federweg NF und der Positiv-Federweg PF konstant bleibt und die Führungskolbenstange 33 entlang der Längsachse L um die Strecke H aus dem Führungszylindertopf 31 heraus verschoben ist.

Die in Figur 2 dargestellte Federanordnung 1 entspricht der Federanordnung aus Figur 1, jedoch ist die Führungskolbenstange 33 vollständig um die Strecke H aus dem Führungszylindertopf 31 heraus verschoben. Ferner befindet sich das Ventil in einer zweiten Stellung. Durch die Gewichtskraft des Fahrzeugs, eine Gewichtskraft des Fahrers und eventuelle Fahrkräfte, die entlang der Längsachse auf die Federanordnung wirken, wird das Fluid aus der ersten Fluidkammer K1 durch das Ventil und den Fluidkanal K5 in die zweite Fluidkammer K2 gepresst.

Gegenüber der Federanordnung aus Figur 1 wird deutlich, dass die Führungskolbenstange 33 zwar um die Strecke H verschoben ist, der Positiv-Federweg PF und der Negativ-Federweg NF jedoch gleich geblieben sind. Diese werden weiterhin durch die Verschiebbarkeit des Kolbens 32 in dem Führungszylindertopf 31 begrenzt, so dass eine Höheneinstellung der Federanordnung ohne eine Änderung der Federwege möglich ist.

Sollte es zu einem Leckageverlust in dem Fluidsystem kommen, das durch die erste Fluidkammer K1, die zweite Fluidkammer K2, den Fluidkanal K5, die Pumpe P, das Ventil V sowie den Fluidleitungen 56 gebildet wird, ist bei den in Figur 1 und Figur 2 dargestellten Federanordnungen 1 ein Rückschlagventil 34 in dem Kolben 32 vorgesehen. Das Rückschlagventil 34 sperrt eine Fluidströmung aus dem Fluidsystem in die dritte bzw. vierte Fluidkammer K3, K4 und erlaubt einen Fluidfluss bzw. eine Fluidströmung aus der dritten Fluidkammer K3 in das Fluidsystem nur, wenn in der zweiten Fluidkammer K2 durch die Pumpe und die Leckageverluste kein Fluid mehr abgepumpt werden kann und somit ein ausreichend hoher Unterdruck entsteht um die Rüstellkraft einer Rückstellfeder des Rückschlagventils 34 zumindest auszugleichen, so dass das Rückschlagventil 34 den Durchfluss bzw. die Strömung des Fluides aus der dritten Fluidkammer K3 in die zweite Fluidkammer K2 bzw. in den Fluidkanal K5 freigibt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Höhenverstellbare Federanordnung (1) für ein Fahrzeug mit einer Tragfeder (40), einem ersten Begrenzungszylinder mit einem ersten Begrenzungszylindertopf (11) und einem ersten Begrenzungskolben (12), einem zweiten Begrenzungszylinder mit einem zweiten Begrenzungszylindertopf (21) und einem zweiten Begrenzungskolben sowie einem Führungszylinder, der einen Führungszylindertopf (31), einen in dem Führungszylindertopf (31) verschiebbar gelagerten Führungskolben und eine Führungskolbenstange (33) aufweist, die an dem Führungskolben fixiert ist und sich aus dem Führungszylindertopf (31) entlang einer Längsachse (L) der Tragfeder (40) heraus und durch die Tragfeder (40) erstreckt, wobei
der erste Begrenzungszylinder an einem von dem Führungskolben (32) entlang der Längsachse (L) beabstandeten Abschnitt der Führungskolbenstange (33) an der Führungskolbenstange (33) fixiert ist und ein erstes Tragfederlager bestimmt, an welchem die Tragfeder gelagert ist,
der Führungszylindertopf (31) ein zweites Tragfederlager bestimmt, an welchem die Tragfeder (40) gelagert ist und
die Tragfeder (40) zwischen dem ersten und dem zweiten Tragfederlager mit einer Federvorspannung eingespannt ist, wobei
die Führungskolbenstange (33) mittels des ersten und zweiten Begrenzungszylinders verschiebbar ist und dabei die auf die Tragfeder (40) wirkende Federvorspannung sowie ein Negativ-Federweg (NF) der Tragfeder (40) konstant bleibt.

2. Federanordnung nach dem vorhergehenden Anspruch, wobei
die Tragfeder (40), der erste Begrenzungszylinder, der zweite Begrenzungszylinder und der Führungszylinder konzentrisch zueinander angeordnet sind.

3. Federanordnung nach einem der vorhergehenden Ansprüche, wobei
der zweite Begrenzungszylinder eine Führungskolbenanschlagsfläche (23) aufweist, welche eine Hubstrecke, entlang welcher der Führungskolben in dem Führungszylindertopf (31) entlang der Längsachse (L) verschiebbar ist, begrenzt.

4. Federanordnung nach dem vorhergehenden Anspruch, wobei
der zweite Begrenzungskolben integral mit dem Führungskolben ausgebildet ist,
der zweite Begrenzungszylindertopf (21) auf einer der Tragfeder (40) zugewandten Seite die Führungskolbenanschlagsfläche (23) aufweist.

5. Federanordnung nach einem der vorhergehenden Ansprüche, wobei
der zweite Begrenzungszylinder vollständig in dem Führungszylindertopf (31) angeordnet ist.

6. Federanordnung nach einem der vorhergehenden Ansprüche, wobei
der erste Begrenzungszylinder eine ersten Fluidkammer (K1) aufweist, die durch den ersten Begrenzungszylindertopf (11) und den ersten Begrenzungskolben (12) gebildet wird,
der zweite Begrenzungszylinder eine zweiten Fluidkammer (K2) aufweist, die durch den zweiten Begrenzungszylindertopf (11) und den zweiten Begrenzungskolben (12) gebildet wird und
die erste Fluidkammer (K1) und die zweite Fluidkammer (K2) durch einen Fluidkanal (K5) strömungstechnisch verbunden sind.

7. Federanordnung nach dem vorhergehenden Anspruch, wobei
ein Volumen der ersten Fluidkammer (K1) durch eine Verschiebung des ersten Begrenzungskolbens (12) relativ zu dem ersten Begrenzungszylindertopf (11) und ein Volumen der zweiten Fluidkammer (K2) durch eine Verschiebung des zweiten Begrenzungskolbens (22) relativ zu dem zweiten Begrenzungszylindertopf (21) variierbar sind und
die Führungskolbenstange (33) durch eine Änderung des Volumens der ersten Fluidkammer (K1) und des Volumens der zweiten Fluidkammer (K2) entlang der Längsachse (L) verschiebbar ist.

8. Federanordnung nach einem der vorhergehenden Ansprüche, wobei
der erste Begrenzungszylindertopf (11) an der Führungskolbenstange (33) fixiert ist und der erste Begrenzungskolben (12) das erste Tragfederlager bildet oder
der erste Begrenzungszylindertopf (11) das erste Tragfederlager bildet und der erste Begrenzungskolben (12) an der Führungskolbenstange (33) fixiert ist.

9. Federanordnung nach einem der vorhergehenden Ansprüche 6 bis 8, wobei
die Führungskolbenstange (33) zumindest abschnittsweise als ein Rohr ausgebildet ist und der Fluidkanal (K5) in dem Rohr angeordnet oder durch das Rohr gebildet ist.

10. Federanordnung nach einem der vorhergehenden Ansprüche 6 bis 9, ferner aufweisend ein Rückschlagventil (34), wobei
der Führungszylinder in seinem Führungszylindertopf (31) eine dritte Fluidkammer (K3) aufweist und die dritte Fluidkammer (K3) mit der ersten Fluidkammer (K1), der zweiten Fluidkammer (K2) und/oder dem Fluidkanal (K5) durch das Rückschlagventil (34) strömungstechnisch verbunden ist und
das Rückschlagventil (34) eine Fluidströmung in die dritten Fluidkammer (K3) sperrt.

11. Federanordnung nach dem vorhergehenden Anspruch, wobei
das Rückschlagventil (34) eine Rückstellfeder aufweist, welche ausgebildet ist, eine Fluidströmung von der dritten Fluidkammer (K3) bis zu einem Erreichen eines vorbestimmten Unterdrucks in der zweiten Fluidkammer (K1) und/oder dem Fluidkanal (K5) zu sperren.

12. Federanordnung nach einem der vorhergehenden Ansprüche 6 bis 11, ferner umfassend eine Fluidpumpe (P) und ein Stellventil (V), wobei
die Fluidpumpe (P) ausgebildet ist, mit dem Stellventil (V) in einer ersten Stellung ein Fluid aus der zweiten Fluidkammer (K2) durch das Stellventil (V) in die erste Fluidkammer (K1) zu pumpen.

13. Federgabel mit einem ersten Gabelbein und einem zweiten Gabelbein, wobei in dem ersten Gabelbein eine Federanordnung (1) gemäß zumindest einem der vorhergehenden Ansprüche und in dem zweiten Gabelbein ein Dämpfer angeordnet ist.

14. Verfahren zur Fahrlagenverstellung eines Fahrzeugs mit einer Federanordnung (1) gemäß der Ansprüche 1 bis 13, wobei
das Fahrzeug aus einer ersten Fahrlage abgesenkt wird, indem
das Stellventil (V) in eine zweite Stellung gebracht wird,
auf die Federanordnung (1) entlang der Längsachse (L) eine Gewichtskraft des Fahrzeugs wirkt,
ein Fluid durch die Gewichtskraft aus dem ersten Begrenzungszylinder durch das Stellventil (V) und den Fluidkanal (K5) in den zweiten Begrenzungszylinder gepresst wird und
sich die Führungskolbenstange (33) entlang der Längsachse (L) in den Führungszylindertopf (31) hinein verschiebt und
das Fahrzeug aus einer zweiten Fahrlage angehoben wird, indem
das Stellventil (V) in eine erste Stellung gebracht wird,
ein Fluid mit einer Pumpe (P) aus dem zweiten Begrenzungszylinder durch das Stellventil (V) und den Fluidkanal (K5) in den ersten Begrenzungszylinder gepumpt wird und
sich die Führungskolbenstange (33) entlang der Längsachse (L) aus dem Führungszylindertopf (31) heraus verschiebt.

## Claims

1. Height-adjustable spring arrangement (1) for a vehicle with a bearing spring (40), a first limiting cylinder with a first limiting cylinder pot (11) and a first limiting piston (12), a second limiting cylinder with a second limiting cylinder pot (21) and a second limiting piston, and a guide cylinder which has a guide cylinder pot (31), a guide piston which is mounted displaceably in the guide cylinder pot (31), and a guide piston rod (33) which is fixed on the guide piston and extends out of the guide cylinder pot (31) along a longitudinal axis (L) of the bearing spring (40) and through the bearing spring (40),
the first limiting cylinder being fixed on the guide piston rod (33) on a section of the guide piston rod (33) which is spaced apart from the guide piston (32) along the longitudinal axis (L), and defining a first bearing spring mounting, on which the bearing spring is mounted,
the guide cylinder pot (31) defining a second bearing spring mounting, on which the bearing spring (40) is mounted, and
the bearing spring (40) being clamped in with a spring prestress between the first and the second bearing spring mounting,
it being possible for the guide piston rod (33) to be displaced by means of the first and second limiting cylinder, and the spring prestress which acts on the bearing spring (40) and a negative spring travel (NF) of the bearing spring (40) remaining constant in the process.

2. Spring arrangement according to the preceding claim,
the bearing spring (40), the first limiting cylinder, the second limiting cylinder and the guide cylinder being arranged concentrically with respect to one another.

3. Spring arrangement according to either of the preceding claims,
the second limiting cylinder having a guide piston stop face (23) which limits a stroke section, along which the guide piston can be displaced in the guide cylinder pot (31) along the longitudinal axis (L).

4. Spring arrangement according to the preceding claim,
the second limiting piston being configured integrally with the guide piston,
the second limiting cylinder pot (21) having the guide piston stop face (23) on a side which faces the bearing spring (40).

5. Spring arrangement according to one of the preceding claims,
the second limiting cylinder being arranged completely in the guide cylinder pot (31).

6. Spring arrangement according to one of the preceding claims,
the first limiting cylinder having a first fluid chamber (K1) which is formed by way of the first limiting cylinder pot (11) and the first limiting piston (12),
the second limiting cylinder having a second fluid chamber (K2) which is formed by way of the second limiting cylinder pot (11) and the second limiting piston (12), and
the first fluid chamber (K1) and the second fluid chamber (K2) being connected in terms of flow by way of a fluid channel (K5).

7. Spring arrangement according to the preceding claim,
it being possible for a volume of the first fluid chamber (K1) to be varied by way of a displacement of the first limiting piston (12) relative to the first limiting cylinder pot (11), and it being possible for a volume of the second fluid chamber (K2) to be varied by way of a displacement of the second limiting piston (22) relative to the second limiting cylinder pot (21), and
it being possible for the guide piston rod (33) to be displaced along the longitudinal axis (L) by way of a change of the volume of the first fluid chamber (K1) and of the volume of the second fluid chamber (K2).

8. Spring arrangement according to one of the preceding claims,
the first limiting cylinder pot (11) being fixed on the guide piston rod (33), and the first limiting piston (12) forming the first bearing spring mounting, or
the first limiting cylinder pot (11) forming the first bearing spring mounting, and the first limiting piston (12) being fixed on the guide piston rod (33).

9. Spring arrangement according to one of the preceding Claims 6 to 8,
the guide piston rod (33) being configured at least in sections as a tube, and the fluid channel (K5) being arranged in the tube or being formed by way of the tube.

10. Spring arrangement according to one of the preceding Claims 6 to 9, having, furthermore, a check valve (34),
the guide cylinder having a third fluid chamber (K3) in its guide cylinder pot (31), and the third fluid chamber (K3) being connected in flow terms by way of the check valve (34) to the first fluid chamber (K1), the second fluid chamber (K2) and/or the fluid channel (K5), and
the check valve (34) shutting off a fluid flow into the third fluid chamber (K3).

11. Spring arrangement according to the preceding claim,
the check valve (34) having a restoring spring which is configured to shut off a fluid flow from the third fluid chamber (K3) until a predefined negative pressure is reached in the second fluid chamber (K1) and/or the fluid channel (K5).

12. Spring arrangement according to one of the preceding Claims 6 to 11, comprising, furthermore, a fluid pump (P) and an actuating valve (V),
the fluid pump (P) being configured, with the actuating valve (V) in a first position, to pump a fluid out of the second fluid chamber (K2) through the actuating valve (V) into the first fluid chamber (K1).

13. Suspension fork with a first fork leg and a second fork leg, a spring arrangement (1) according to at least one of the preceding claims being arranged in the first fork leg, and a damper being arranged in the second fork leg.

14. Method for adjusting the driving position of a vehicle with a spring arrangement (1) according to Claims 1 to 13,
the vehicle being lowered from a first driving position, by
the actuating valve (V) being moved into a second position,
a weight of the vehicle acting on the spring arrangement (1) along the longitudinal axis (L),
a fluid being pressed out of the first limiting cylinder through the actuating valve (V) and the fluid channel (K5) into the second limiting cylinder by way of the weight, and
the guide piston rod (33) being displaced along the longitudinal axis (L) into the guide cylinder pot (31), and
the vehicle being lifted out of a second driving position, by
the actuating valve (V) being moved into a first position,
a fluid being pumped by way of a pump (P) out of the second limiting cylinder through the actuating valve (V) and the fluid channel (K5) into the first limiting cylinder, and
the guide piston rod (33) being displaced along the longitudinal axis (L) out of the guide cylinder pot (31).

## Revendications

1. Dispositif à ressort (1) réglable en hauteur pour un véhicule, comportant un ressort de support (40), un premier cylindre de limitation doté d'un premier pot de cylindre de limitation (11) et d'un premier piston de limitation (12), un deuxième cylindre de limitation doté d'un deuxième pot de cylindre de limitation (21) et d'un deuxième piston de limitation ainsi qu'un cylindre de guidage qui présente un premier pot de cylindre de guidage (31), un piston de guidage monté déplaçable dans le pot de cylindre de guidage (31) et une tige de piston de guidage (33) qui est fixée au piston de guidage et s'étend hors du pot de cylindre de guidage (31) le long d'un axe longitudinal (L) du ressort de support (40) et à travers le ressort de support (40), dans lequel
le premier cylindre de limitation (32) est fixé à la tige de piston de guidage (33) au niveau d'une partie de la tige de piston de guidage (33) espacée du piston de guidage (32) le long de l'axe longitudinal (L) et détermine un premier appui de ressort de support sur lequel le ressort de support est supporté,
le pot de cylindre de guidage (31) définit un deuxième appui de ressort de support sur lequel le ressort de support (40) est supporté et
le ressort de support (40) est serré entre le premier et le deuxième appui de ressort de support avec une précontrainte de ressort, dans lequel
la tige de piston de guidage (33) est déplaçable au moyen du premier et du deuxième cylindre de limitation et en l'occurrence la précontrainte de ressort agissant sur le ressort de support (40) ainsi qu'une course de ressort négative (NF) du ressort de support (40) demeurent constantes.

2. Dispositif à ressort selon la revendication précédente, dans lequel
le ressort de support (40), le premier cylindre de limitation, le deuxième cylindre de limitation et le cylindre de guidage sont disposés de manière concentrique les uns par rapport aux autres.

3. Dispositif à ressort selon l'une des revendications précédentes, dans lequel
le deuxième cylindre de limitation présente une surface de butée de piston de guidage (23), laquelle limite une section de course le long de laquelle le piston de guidage est déplaçable dans le pot de cylindre de guidage (31) le long de l'axe longitudinal (L).

4. Dispositif à ressort selon la revendication précédente, dans lequel
le deuxième piston de limitation est réalisé d'un seul tenant avec le piston de guidage,
le deuxième pot de cylindre de limitation (21) présente la surface de butée de piston de guidage (23) sur un côté tourné vers le ressort de support (40).

5. Dispositif à ressort selon l'une des revendications précédentes, dans lequel
le deuxième cylindre de limitation est disposé complètement dans le pot de cylindre de guidage (31).

6. Dispositif à ressort selon l'une des revendications précédentes, dans lequel
le premier cylindre de limitation présente une première chambre de fluide (K1) qui est formée par le premier pot de cylindre de limitation (11) et le premier piston de limitation (12),
le deuxième cylindre de limitation présente une deuxième chambre de fluide (K2) qui est formée par le deuxième pot de cylindre de limitation (11) et le deuxième piston de limitation (12) et
la première chambre de fluide (K1) et la deuxième chambre de fluide (K2) sont reliées l'une à l'autre de manière fluidique par un canal de fluide (K5).

7. Dispositif à ressort selon la revendication précédente, dans lequel
un volume de la première chambre de fluide (K1) peut être modifié par un déplacement du premier piston de limitation (12) par rapport au premier pot de cylindre de limitation (11) et un volume de la deuxième chambre de fluide (K2) peut être modifié par un déplacement du deuxième piston de limitation (22) par rapport au deuxième pot de cylindre de limitation (21) et
la tige de piston de guidage (33) peut être déplacée par un changement du volume de la première chambre de fluide (K1) et du volume de la deuxième chambre de fluide (K2) le long de l'axe longitudinal (L).

8. Dispositif à ressort selon l'une des revendications précédentes, dans lequel
le premier pot de cylindre de limitation (11) est fixé à la tige de piston de guidage (33) et le premier piston de limitation (12) forme le premier appui de ressort de support ou
le premier pot de cylindre de limitation (11) forme le premier appui de ressort de support et le premier piston de limitation (12) est fixé à la tige de piston de guidage (33).

9. Dispositif à ressort selon l'une des revendications précédentes 6 à 8, dans lequel
la tige de piston de guidage (33) est réalisée au moins dans certaines parties sous la forme d'un tube et le canal de fluide (K5) est disposé dans le tube ou formé par le tube.

10. Dispositif à ressort selon l'une des revendications précédentes 6 à 9, présentant en outre une soupape anti-retour (34), dans lequel
le cylindre de guidage présente, dans son pot de cylindre de guidage (31), une troisième chambre de fluide (K3) et la troisième chambre de fluide (K3) est reliée de manière fluidique à la première chambre de fluide (K1), la deuxième chambre de fluide (K2) et/ou le canal de fluide (K5) par le biais de la soupape anti-retour (34) et
la soupape anti-retour (34) bloque un flux de fluide dans la troisième chambre de fluide (K3).

11. Dispositif à ressort selon l'une des revendications précédentes, dans lequel
la soupape anti-retour (34) présente un ressort de rappel, lequel est réalisé pour bloquer un flux de fluide à partir de la troisième chambre de fluide (K3) jusqu'à ce qu'une dépression prédéfinie soit atteinte dans la deuxième chambre de fluide (K1) et/ou le canal de fluide (K5) .

12. Dispositif à ressort selon l'une des revendications précédentes 6 à 11, comportant en outre une pompe à fluide (P) et une soupape de réglage (V), dans lequel
la pompe à fluide (P) est réalisée pour pomper un fluide hors de la deuxième chambre de fluide (K2) à travers la soupape de réglage (V) dans la première chambre de fluide (K1) lorsque la soupape de réglage (V) est dans une première position.

13. Fourche de suspension dotée d'un premier tube de fourche et d'un deuxième tube de fourche, dans laquelle un dispositif à ressort (1) selon au moins l'une des revendications précédentes est disposé dans le premier tube de fourche et un amortisseur est disposé dans le deuxième tube de fourche.

14. Procédé de réglage de la position de conduite d'un véhicule à l'aide d'un dispositif à ressort (1) selon les revendications 1 à 13, dans lequel
le véhicule est abaissé à partir d'une première position de conduite, par le fait que
la soupape de réglage (V) est amenée à une deuxième position,
un poids du véhicule agit sur le dispositif à ressort (1) le long de l'axe longitudinal (L),
un fluide est forcé par le poids hors du premier cylindre de limitation à travers la soupape de réglage (V) et le canal de fluide (K5) dans le deuxième cylindre de limitation et
la tige de piston de guidage (33) se déplace le long de l'axe longitudinal (L) dans le pot de cylindre de guidage (31) et
le véhicule est soulevé à partir d'une deuxième position de conduite, par le fait que
la soupape de réglage (V) est amenée à une première position,
un fluide est pompé à l'aide d'une pompe (P) à partir du deuxième cylindre de limitation à travers la soupape de réglage (V) et le canal de fluide (K5) dans le premier cylindre de limitation et
la tige de piston de guidage (33) se déplace le long de l'axe longitudinal (L) hors du pot de cylindre de guidage (31).
